Europäisches Patentamt

European Patent Office

Office européen des brevets

(11) Veröffentlichungsnummer: **0 355 730**
**A2**

## EUROPÄISCHE PATENTANMELDUNG

(21) Anmeldenummer: 89115243.1

(51) Int. Cl.⁴: **B23Q 11/14**

(22) Anmeldetag: 18.08.89

(30) Priorität: 20.08.88 DE 3828305

(43) Veröffentlichungstag der Anmeldung:
28.02.90 Patentblatt 90/09

(84) Benannte Vertragsstaaten:
CH DE FR GB IT LI

(71) Anmelder: Saljé, Ernst
Schulheide 4
D-2106 Bendestorf(DE)

(72) Erfinder: Saljé, Ernst
Schulheide 4
D-2106 Bendestorf(DE)

(74) Vertreter: Koscholke, Gotthold, Dr.-Ing.
Rheinallee 147
D-4000 Düsseldorf 11(DE)

(54) Verfahren zur thermischen Beeinflussung von Werkzeugmaschinen, Vorrichtung zur Durchführung des Verfahrens und Bauteil.

(57) Zur Erhöhung der Arbeitsgenauigkeit einer Werkzeugmaschine wird an wenigstens zwei vorgegebenen Stellen oder Bereichen eines oder mehrerer Bauteile der Werkzeugmaschine die dort herrschende Temperatur kontinuierlich oder in zeitlichen Abständen gemessen. Wenn diese Ist-Temperaturen um ein vorgebbares Maß voneinander abweichen, wird eine thermische Beeinflussung wenigstens eines Bereiches im Sinne der Angleichung der Ist-Temperaturen vorgenommen. Eine Vorrichtung zur selbsttätigen Herstellung einer bestimmten Temperaturverteilung an zu beeinflussenden Bereichen enthält einen funktionsmäßig mit Temperaturmeßgeräten und Schalt- oder Steuerelementen (S1 bis S6) für Wärmezuführungs- bzw. -Abführungs-Einrichtungen (W1 bis W6) verbundenen Regler (41).

FIG. 15

## Verfahren zur thermischen Beeinflussung von Werkzeugmaschinen, Vorrichtung zur Durchführung des Verfahrens und Bauteil

Die Erfindung bezieht sich auf ein Verfahren zur Erhöhung der Arbeitsgenauigkeit von Werkzeugmaschinen durch thermische Beeinflussung, auf eine Vorrichtung zur thermischen Beeinflussung, insbesondere zur Durchführung des Verfahrens, und auf einen insbesondere bei dem Verfahren bzw. bei der Vorrichtung verwendbaren Bauteil.

In der Fertigungstechnik werden ständig kleinere Toleranzen verlangt, so daß es notwendig ist, auch diejenigen Fehler zu verringern, die an der Werkzeugmaschine auftreten. Dabei spielen Temperatureinflüsse eine besondere Rolle. Wärmedeformationen der Maschine oder ihrer Bauteile führen zu fehlerhaften Verlagerungen am Wirkpunkt zwischen Werkzeug und Werkstück, die so groß werden können, daß die geforderte Genauigkeit bei der Bearbeitung der Werkstücke nicht mehr einzuhalten ist.

Welche Bedeutung Wärmedeformationen bei Werkzeugmaschinen-Gestellen haben, wird deutlich, wenn man die Maßänderungen betrachtet, die durch unterschiedliche Temperaturen hervorgerufen werden. So dehnt sich ein Stab aus Gußeisen mit einer Länge von einem Meter bei Erwärmung um $1°$ C um etwa 0,01 mm aus. Bei den heute gforderten Toleranzen, die sogar in der Größenordnung von 0,001 mm liegen können, ist dies ein beachtlicher Wert.

Wärmequellen lassen sich unterteilen in solche, die von außen auf die Werkzeugmaschine einwirken, z.B. Sonneneinstrahlung, unterschiedliche Temperaturen der umgebenden Luft usw., und solche, die innerhalb der Maschine selbst liegen, wie Hydraulikmotoren oder Lager von schnellaufenden Spindeln, die örtlich hohe Temperaturen hervorrufen können. Auch der Bearbeitungsvorgang selbst, z.B. ein Schnittvorgang, kann eine innere Wärmequelle sein. An Lagerstellen, Hydraulikanlagen, in Schnittprozessen usw. wird Energie in Wärme umgewandelt, die durch Leitung und Strahlung in das Maschinengestell gelangt und zu Deformationen führt.

Nach Saljé, "Elemente der spanenden Werkzeugmaschinen", Carl Hanser Verlag, München, 1986, Seite 111, sind verschiedene Anstrengungen unternommen worden, um die Verhältnisse zu verbessern, so bei hydraulischen Maschinen durch Temperierung des Hydrauliköls oder bei nicht hydraulischen Maschinen dadurch, daß durch das Gestell der Maschine ein erwärmter Luftstrom geblasen wird. Durch solche allgemeinen Maßnahmen lassen sich aber die nachteiligen Einflüsse einzelner Wärmequellen nicht beseitigen, ebensowenig wie die Auswirkungen einer zeitlich veränderlichen Wärmeabgabe eines zur Maschine gehörenden Elements. Bei einer numerisch gesteuerten Maschine ist auch schon vorgeschlagen worden, eine wärmebedingte Längenänderung mittels einer Meßstange und einer Meßuhr zu erfassen und bei der Positionierung eines Schlittens mittels der Steuerung eine entsprechende Korrektur vorzunehmen. Abgesehen davon, daß die Anwendbarkeit dieser Maßnahme sehr begrenzt ist, wird dabei der Störeinfluß bzw. die Fehlerursache nicht beseitigt.

Es genügt auch nicht, eine Werkzeugmaschine etwa nach außen hin zu isolieren oder in einem klimatisierten Raum aufzustellen. Der Gedanke, hierdurch oder durch eine mehr oder weniger lange Leerlaufzeit der Maschine vor Beginn der Bearbeitung eine Beharrungstemperatur zu erreichen und damit die Genauigkeit beim Arbeiten der Maschine zu verbessern, berücksichtigt nicht die Tatsache, daß die durch innere Wärmequellen erzeugten Wärmemengen nicht konstant sind, sondern vom Betriebszustand der Maschine oder vom Prozeßablauf abhängig sind. Dabei können insbesondere auch schnelle zeitliche Temperaturänderungen auftreten. Somit lassen sich auch durch eine klimatisierte Umgebung unerwünschte Wärmedeformationen der Werkzeugmaschine nicht vermeiden.

Dies ist die Erkenntnis der Erfindung, deren Aufgabe es ist, bestehende Unzulänglichkeiten und Schwierigkeiten zu überwinden und einen Weg zu finden, um Wärmedeformationen bei Werkzeugmaschinen, zumindest in dem Maße, in dem sie sich nachteilig auswirken können, möglichst gering zu halten. Dies gilt in erster Linie für das Arbeiten der Maschine, jedoch kann insbesondere auch die Herstellung der Maschine in Betracht kommen. Mit der Erfindung soll weiterhin eine vorteilhafte Vorrichtung geschaffen werden, mit der unerwünschte Wärmedeformationen zumindest in Grenzen gehalten werden können. Auch will die Erfindung eine günstige Gestaltung von Werkzeugmaschinen-Bauteilen angeben, die dem angestrebten Ziel dient. Weitere mit alledem in Verbindung stehende Probleme, mit denen sich die Erfindung befaßt, ergeben sich aus der jeweiligen Erläuterung der aufgezeigten Lösung.

Die Erfindung sieht vor, daß in wenigstens zwei vorgegebenen Bereichen eines oder mehrerer Bauteile der Werkzeugmaschine die dort herrschende Ist-Temperatur kontinuierlich oder in zeitlichen Abständen gemessen wird und daß, wenn diese Ist-Temperaturen um ein vorgebbares Maß voneinander abweichen, eine thermische Beeinflussung wenigstens eines Bereiches im Sinne einer Angleichung der Ist-Temperaturen vorgenommen wird.

Es ist ein wesentlicher Gedanke der Erfindung, Wärmequellen, d.h. Zuführmöglichkeiten für Wärme, und ggfs. auch Wärmesenken, d.h. Wärmeabführ-Möglichkeiten, so vorzusehen und beeinflußbar zu machen, daß sich durch gezielte Erwärmung oder Abkühlung gewählter Bereich der Werkzeugmaschine Wärmedeformationen und damit wärmebedingte Fehler zumindest weitgehend reduzieren lassen. Mit Hilfe solcher Wärmequellen und/oder Wärmesenken können bestehende nachteilige oder nicht optimale Temperaturverteilungen an oder in der Maschine ggfs. auch schnell so verändert werden, daß sich ein günstiger Zustand ergibt.

Die Bereiche, an denen eine Temperaturmessung erfolgt, können gleich denjenigen sein, an denen auch eine thermische Beeinflussung vorgenommen wird. Dies muß jedoch nicht unbedingt so sein. Je nach Art der Maschine bzw. den gegebenen Umständen kann es auch zweckmäßig sein, Temperaturmessungen an anderen als den thermisch beeinflußbaren Bereichen bzw. zusätzlich zu Temperaturmessungen an solchen Bereichen durchzuführen und die Ergebnisse für die thermische Beeinflussung zu verwenden. Der Fachmann ist nach der hier gegebenen Lehre in der Lage, die betreffenden Bereiche unter Berücksichtigung der jeweiligen Gegebenheiten in der richtigen Weise zu wählen.

Die Erfindung sieht insbesondere vor, die Temperaturen an solchen Stellen der Werkzeugmaschine zu messen, die eine zumindest annähernde Beurteilung des Verhaltens der Maschine im Hinblick auf die geometrische Ähnlichkeit bei verschiedenen Temperaturniveaus gestatten. Bei der Erfindung wurde erkannt, daß die Genauigkeit einer Werkzeugmaschine erhalten bleibt, wenn sich das Maschinengestell bzw. die für die Genauigkeit maßgebenden Elemente gleichmäßig erwärmen oder abkühlen. Wenn an den entscheidenden Stellen zu jedem Zeitpunkt die gleiche Temperatur herrscht, sei diese höher oder niedriger als eine angenomme Ausgangstemperatur, so bleibt die geometrische Ähnlichkeit der Maschine bestehen und damit auch die gegebene Genauigkeit.

Eine gezielte Temperaturbeeinflussung von einzelnen Bereichen einer Werkzeugmaschine kommt nicht nur beim Arbeiten der Maschine in Betracht. Vielmehr kann dies, zumindest in beschränkten Umfang, auch bei der Herstellung bzw. Montage einer Werkzeugmaschine von großem Nutzen sein. Es läßt sich dann dabei schon für eine örtlich und zeitlich definitive und konstante Temperatur sorgen. Temperaturmessungen an miteinander zu verbindenden oder aneinander zur Ausführung von Relativbewegungen anzupassenden Teilen, z.B. Schlitten und Bett, der Maschine an einzelnen Stellen derselben ermöglichen es, etwa bestehende Temperaturdifferenzen durch Aufheizen oder Abkühlen der Bauteile bzw. einzelner Bereiche an ihnen zu eliminieren und dadurch einen einheitlichen Ausgangszustand zu erreichen. Weiterhin gestattet es das Verfahren, die Temperatur bei der Herstellung oder Montage der Werkzeugmaschine zumindest annähernd schon entsprechend derjenigen Temperatur zu wählen, die im Betrieb zu erwarten ist. Dies bedeutet eine vorteilhafte Anpassung.

Für die thermische Beeinflussung eines oder mehrerer Bereiche einer Werkzeugmaschine bestehen verschiedene Möglichkeiten. Insbesondere kann die Beeinflussung auf dem Wege der Konvektion oder auf dem Weg der Strahlung vorgenommen werden.

Eine vorteilhafte Vorrichtung zur thermischen Beeinflussung wenigstens eines Bauteiles einer Werkzeugmaschine, insbesondere zur Durchführung eines Verfahrens der erläuterten Art, kennzeichnet sich dadurch, daß an der Werkzeugmaschine wenigstens zwei Temperatur-Meßstellen vorgesehen sind, daß thermisch zu beeinflussenden Bereichen der Werkzeugmaschine Wärme-Zuführungs- bzw. -Abführungs-Einrichtungen zugeordnet sind und daß Schalt- oder Steuerelemente vorgesehen sind, mittels derer die Wärme-Zuführungs- bzw. -Abführungs-Einrichtungen nach Maßgabe erfaßter Temperatur-Meßwerte zur Erzielung eines gewünschten Temperaturzustandes zur Wirkung bringbar sind.

Mit einer solchen Vorrichtung kann so auf die Werkzeugmaschine eingewirkt werden, daß Beeinträchtigungen der Genauigkeit durch Wärmedeformationen zumindest weitgehend vermieden werden. Der mit der Vorrichtung zu realisierende Temperaturzustand ist insbesondere eine konstante Temperatur an genauigkeitsrelevanten Teilen der Maschine.

Für die von den Temperatur-Meßgeräten gelieferten Werte ist zweckmäßig eine Anzeige vorgesehen, so daß der jeweilige Zustand kontrolliert werden kann. Unter den Begriff der Anzeige fallen dabei Geräte, die ein Erkennen der jeweiligen Temperaturverhältnisse gestatten. Es kann sich um analoge oder digitale Anzeige-Geräte oder insbesondere auch um eine z.B. jeweils abrufbare Darstellung auf einem Bildschirm od.dgl. handeln.

Eine besonders vorteilhafte Ausführung der Vorrichtung kennzeichnet sich durch einen funktionsmäßig mit den Temperatur-Meßgeräten und den Schalt- oder Steuerelementen für die Wärme-Zuführungs- bzw. -Abführungs-Einrichtungen verbundenen Regler zur selbsttätigen Herstellung einer vorgebbaren Temperaturverteilung an den zu beeinflussenden Bereichen, vornehmlich einer gleichen Temperatur. Der Regler arbeitet insbesondere nach einem Rechenmodell, das vom Fachmann für den jeweiligen Fall erstellt werden kann.

Die thermische Beeinflussung eines oder mehrerer Bereiche der Werkzeugmaschine kann auf verschiedene Weise erfolgen, insbesondere durch ein temperierendes Medium, durch Wärmeerzeugung an der Bedarfsstelle selbst oder durch den betreffenden Bereichen zugeordnete Wärmestrahler, etwa elektrische oder mit anderer Energie betriebene Strahler, die an den Bereichen oder in deren Nähe vorgesehen werden können, im Bedarfsfall auch als nachträgliche Ausrüstung einer Maschine.

Das temperierende Medium ist vorteilhaft ein Strömungsmedium in Gestalt einer Flüssigkeit, z.B. Wasser oder Öl. Es ist aber auch ein gasförmiges Strömungsmedium, insbesondere Luft, nicht ausgeschlossen.

Es kann so sein, daß ein und dasselbe temperierende Medium zur Versorgung aller Bedarfsstellen verwendet wird. Weil das Medium dabei im wesentlichen nur eine gegebene Temperatur hat, läßt sich die jeweils gewünschte thermische Beeinflussung eines bestimmten Bereiches durch entsprechende Wahl der Einwirkungszeit und/oder der zur Wirkung gebrachten Menge des Mediums erreichen. Es kann aber auch so sein, daß mehrere Mengen von Strömungsmedium mit jeweils verschiedenen Temperaturen bereitgehalten werden, so daß dem einen oder dem anderen zu beeinflussenden Bereich oder mehreren Bereichen zu verschiedenen Zeiten Strömungsmedium mit einer verfügbaren Temperatur zuführbar ist.

Dementsprechend wird eine Vorrichtung mit einem oder mehreren Behältern, Tanks od.dgl. sowie mit einem oder mehreren Heiz- oder Kälte-Aggregaten und mit geeigneten Schalt- oder Steuerelementen ausgestattet.

Was vorstehend für ein temperierendes Medium gesagt wurde, gilt sinngemäß und entsprechend auch für eine Heiz- bzw. Kühlmöglichkeit anderer Art, einschließlich einer Wärmezufuhr durch Strahlung. Veränderliche können hier die Temperatur und die Einwirkzeit sein.

Gegenstand der Erfindung ist weiterhin ein Werkzeugmaschinen-Bauteil, wie Gestell, Untersatz, Bett, Schlitten, Spindelstock od.dgl., das insbesondere zur Verwendung bei dem erläuterten Verfahren bzw. bei der erläuterten Vorrichtung in Betracht kommt und das sich dadurch kennzeichnet, daß wenigstens in einem Bereich des Bauteils ein Hohlraum mit einem Zulauf und einem Ablauf für ein Strömungsmedium vorhanden ist. Das Strömungsmedium kann dabei als vorteilhaftes Temperiermittel dienen. Je nachdem, ob es sich um ein erwärmtes bzw. heißes Medium oder um ein kaltes Medium handelt, kann der von ihm durchströmte Hohlraum in dem Bauteil eine Wärmequelle oder eine Wärmesenke bilden.

Für die Ausbildung des von dem Strömungsmedium durchflossenen Hohlraumes bestehen verschiedene Möglichkeiten, so daß auch sehr unterschiedlichen Anforderungen gut Rechnung getragen werden kann. Der Hohlraum kann insbesondere rohrförmig oder kammerförmig ausgebildet sein und auch einen einfach oder mehrfach umgelenkten Weg für das Strömungsmedium bilden. Je nach der Größe bzw. räumlichen Erstreckung des Hohlraumes läßt sich der zu beeinflussende Bereich eng begrenzt oder weiter ausgedehnt halten. Vorteilhaft wird der Hohlraum bereits bei der Herstellung des Bauteils in diesem gebildet. Dies gilt sowohl für gegossene oder durch Schüttung hergestellte Elemente, besonders aus Gußeisen oder aus Polymerbeton bzw. einem entsprechenden Material, als auch für Schweißkonstruktionen.

Bei einer anderen Ausführung des Werkzeugmaschinen-Bauteils ist wenigstens in einem Bereich desselben eine elektrische Heizeinrichtung vorgesehen. Diese wird zweckmäßig schon bei der Herstellung des Bauteils in demselben angeordnet, kann aber auch nachträglich innen oder außen angebracht werden.

Weitere Einzelheiten, Merkmale und Vorteile der Erfindung ergeben sich aus der nachstehenden Erläuterung von Ausführungsbeispielen, aus der zugehörigen Zeichnung und aus den Ansprüchen. Es zeigen:

Fig. 1 ein Bett als Bauteil einer Werkzeugmaschine in perspektivischer Ansicht,

Fig. 2 eine verkleinerte Seitenansicht des Bettes nach Fig. 1,

Fig. 3 einen Schnitt nach der Linie III - III in Fig.2,

Fig. 4 eine Meßstelle in vergrößertem Schnitt,

Fig. 5 Ausführungen von Wärme-Zuführungs- bzw. -Abführungs-Einrichtungen bei einem Bett entsprechend Fig. 1,

Fig. 6 weitere Ausführungen von Wärme-Zuführungs- bzw. -Abführungs-Einrichtungen bei einem Bett entsprechend Fig. 1,

Fig. 7 bis 10 Darstellungen von Verformungen eines Werkzeugmaschinenbettes bei verschiedenen Temperatur-Einwirkungen,

Fig. 11 ein Werkzeugmaschinengestell in Draufsicht,

Fig. 12 ein etwa der Fig. 11 entsprechendes Werkzeugmaschinengestell in Seitenansicht, zum Teil im Schnitt,

Fig. 13 eine andere Ausführung eines Werkzeugmaschinen-Bauteils im Schnitt,

Fig. 14 eine weitere Ausführung eines Werkzeugmaschinen-Bauteils im Schnitt und

Fig. 15 eine Temperatur-Regeleinrichtung, teils schematisch.

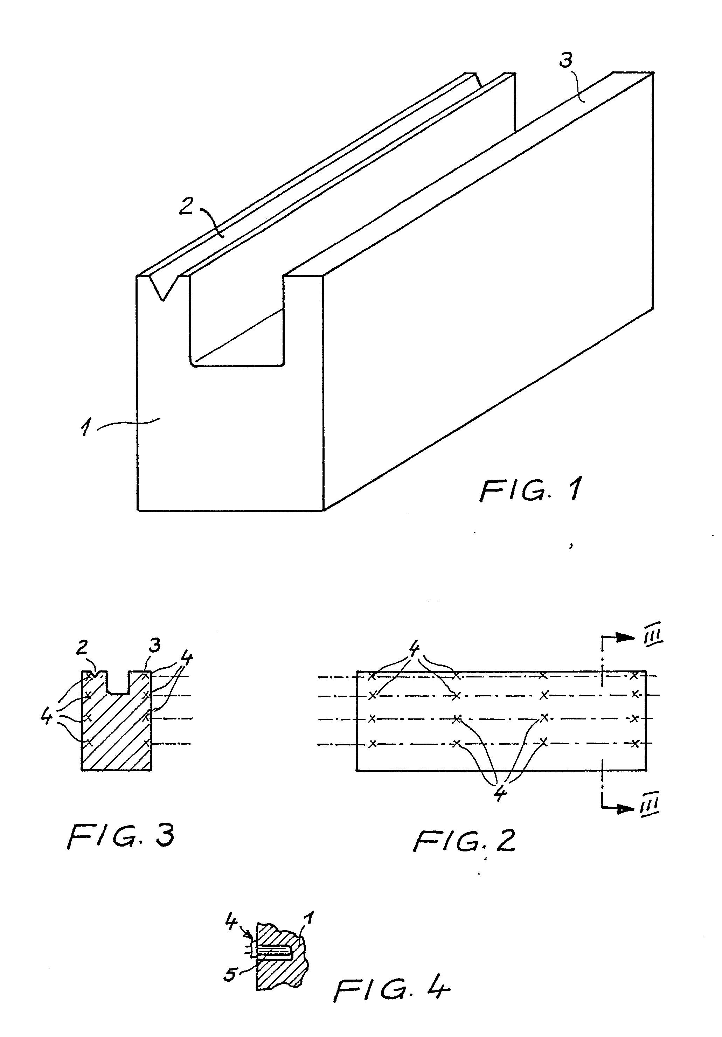

Bei dem in Fig. 1 gezeigten Bauteil kann es sich z.B. um das Bett 1 einer Drehmaschine oder eines Bearbeitungszentrums handeln. Mit den Zahlen 2 und 3 sind Führungsbahnen für einen auf dem Bett verschiebbaren, nicht dargestellten Schlitten bezeichnet. Eine Aussparung an der Oberseite dient dazu, geeignete Vorschubelemente zum Antrieb des Schlittens aufzunehmen. Ein solcher Bauteil unterliegt bei unterschiedlichen Temperatureinflüssen Verformungen, die leicht ein solches Maß annehmen können, daß die Genauigkeit nicht mehr gewährleistet ist. Um dem abzuhelfen, werden die nachstehend im einzelnen erläuterten Maßnahmen gemäß der Erfindung getroffen.

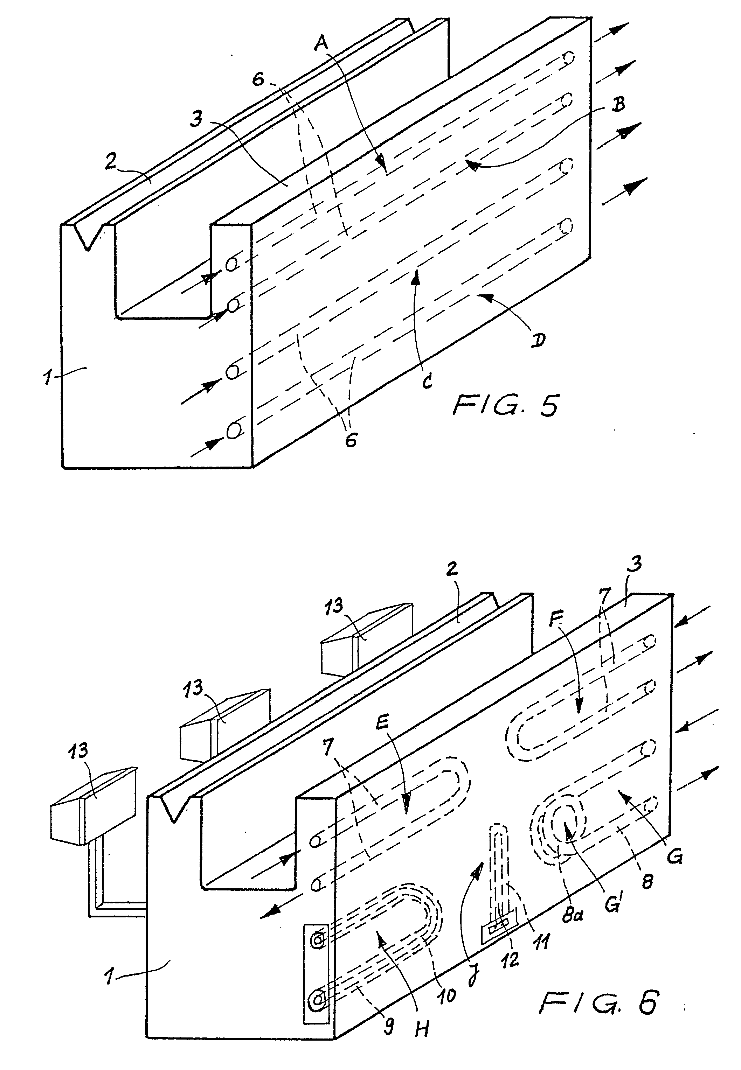

Wie die Figuren 2 bis 4 veranschaulichen, ist das Bett 1 in verschiedenen, strichpunktiert angedeuteten Ebenen mit einer Anzahl von Temperatur-Meßstellen 4 ausgestattet. An jeder dieser Stellen befindet sich ein geeignetes Temperatur-Meßgerät, z.B. ein Meßfühler, Sensor, Thermoelement, Widerstandsthermometer od.dgl., wie dies in Fig. 4 bie der Zahl 5 angedeutet ist. Solche Temperatur-Meßgeräte 5 können in Bohrungen des Bauteils 1 untergebracht sein, z.B. in einer Tiefe von etwa 35 mm, oder aber auch an der Oberfläche des Bauteils angeordnet werden. Hierfür bestehen je nach den Gegebenheiten verschiedene Möglichkeiten. Die Temperatur-Meßstellen können weitgehend regelmäßig verteilt angeordnet sein. Bei einer näheren Kenntnis des Verformungsverhaltens des Bauteils können aber auch andere bestimmte Punkte, die für den Temperatureinfluß von besonderer Bedeutung sind, für die Anordnung dieser Meßstellen ausgewählt werden.

Die Figuren 5 und 6 veranschaulichen verschiedene Möglichkeiten einer thermischen Beeinflussung von Bereichen des Werkzeugmaschinen-Bauteils, für das hier wiederum das Bett 1 nach Fig. 1 gewählt wurde. Bei der Ausführung nach Fig. 5 sind in langgestreckten Bereichen A, B, C und D Einrichtungen 6 vorgesehen, mittels derer den Bereichen Wärme zugeführt oder Wärme von denselben abgeführt werden kann. Es handelt sich bei den Einrichtungen 6 um rohrartig ausgebildete Hohlräume im Bett 1, die von einem temperierenden Medium durchströmt werden können. Dass Medium kann eine Flüssigkeit oder auch Luft bzw. ein anderes Gas sein. Die Armaturen und Anschlüsse für die Zuleitung bzw. Ableitung des Mediums sind nicht besonders dargestellt. Sie können von üblicher Ausführung sein. Durch Pfeile ist jeweils die Strömungsrichtung angedeutet.

In Fig. 6 sind in den Bereichen E und F rohrförmige Hohlräume 7 vorgesehen, die von einem temperierenden Medium durchströmt werden können. Hier ist dieser Strömungsweg umgelenkt und parallel zurückgeführt, wie die Zeichnung erkennen läßt, so daß das Ein- und Ausströmen des Mediums entsprechend den eingezeichneten Pfeilen an derselben Seite des Bauteils erfolgt. Damit sind auf einer Höhe des Bauteils 1 zwei Bereiche geschaffen, die in gleicher oder auch in unterschiedlicher Weise temperiert werden können.

Weiterhin zeigt Fig. 6 einen Bereich G, bei dem ein rohrförmiger Hohlraum 8 ähnlich wie ein Hohlraum 7 angeordnet ist, wobei hier jedoch eine mehrfache Umlenkung 8a vorhanden ist, so daß im Bereich G' eine besonders intensive Temperatur-Beeinflussung stattfinden kann.

Die Temperatur des temperierenden Mediums kann je nach den Anforderungen gewählt werden, sei es relativ hoch, sei es niedrig, so daß es möglich ist, den betreffenden Bauteil entweder zu erwärmen oder abzukühlen. Es ist dabei insbesondere auch möglich, auf verschiedene Bereiche jeweils mit Medien von unterschiedlichen Temperaturen einzuwirken.

Anstelle einer Temperatur-Beeinflussung mittels eines strömenden Mediums kann auch eine solche mit Hilfe eines elektrischen Heizelements vorgenommen werden. Als Beispiel zeigt Fig. 6 einen Bereich H mit einem elektrischen Heizelement 10 in Form einer liegenden Schleife, das in einer rohrförmigen Ausnehmung 9 von entsprechender Form untergebracht ist. Im Bereich J ist ein elektrisches Heizelement 12 in Form eines in einer Bohrung 11 des Bettes 1 untergebrachten Stabes dargestellt.

Des weiteren ist es auch möglich, eine Temperatur-Beeinflussung des Bauteiles mit Hilfe von Strahlern vorzunehmen, wie solche jeweils bei der Zahl 13 in Fig. 6 angedeutet sind. Die von diesen abgegebene Wärme beeinflußt entsprechende Bereiche im oberen Teil der rückwärtigen Seitenwand des Bettes 1. Die Strahler 13 können mit dem Bauteil verbunden oder aber auch gesondert aufgestellt oder angebracht sein.

Der Übersichtlichkeit halber sind in den Figuren 5 und 6 die Temperatur-Meßstellen nicht eingezeichnet. Diese sind so angeordnet, wie es dem jeweiligen Fall am besten entspricht. Grundsätzlich wird dazu auf das Beispiel nach den Figuren 2 bis 4 verwiesen.

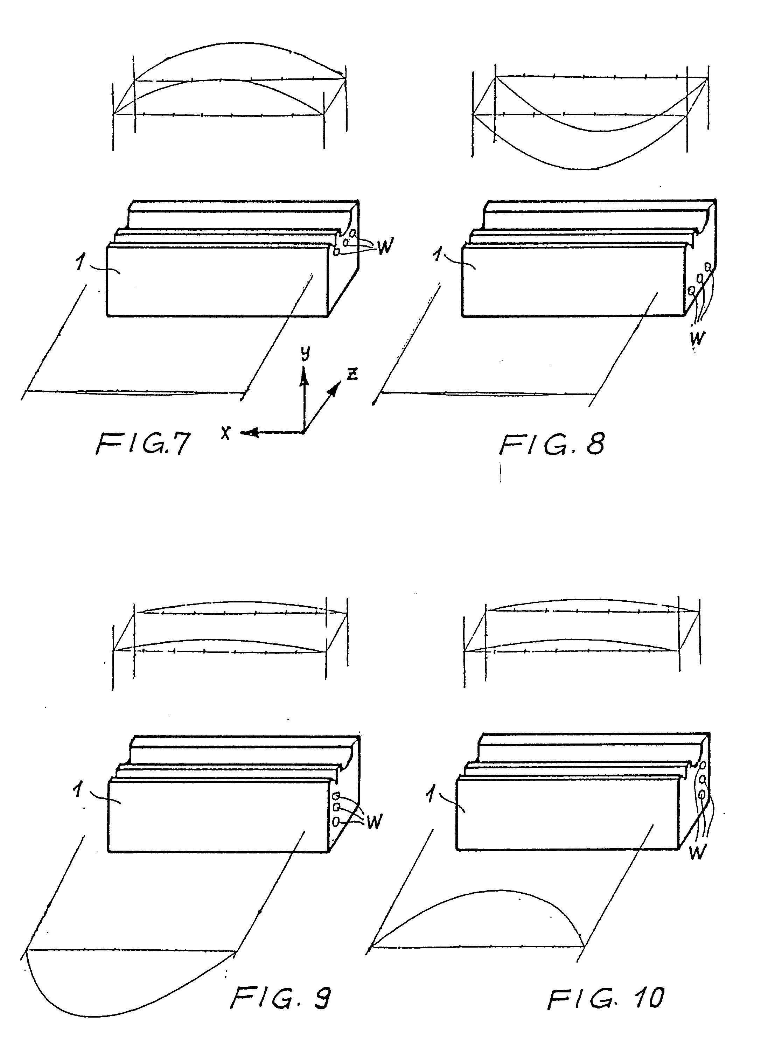

In den Figuren 7 bis 10 ist veranschaulicht, wie sich unterschiedliche Erwärmungen eines Bauelements, etwa eines Bettes 1, in einer Verformung desselben auswirken. Der Einfachheit halber werden nachstehend die Wärme-Zuführungs- bzw. -Abführungs-Einrichtungen und die mit ihnen erzielten Wirkungen als Wärmequellen bzw. Wärmesenken bezeichnet. In den Figuren 7 bis 10 ist jeweils oberhalb des Bettes 1 die Verformung in y-Richtung, d.h. in der Vertikalen, und unterhalb, in Zuordnung zur Oberseite des Bettes, dessen Verformung in z-Richtung, d.h. zur Seite hin, eingezeichnet. Es sind also jeweils die Geradheitsabweichungen der Führungsbahnen erkennbar.

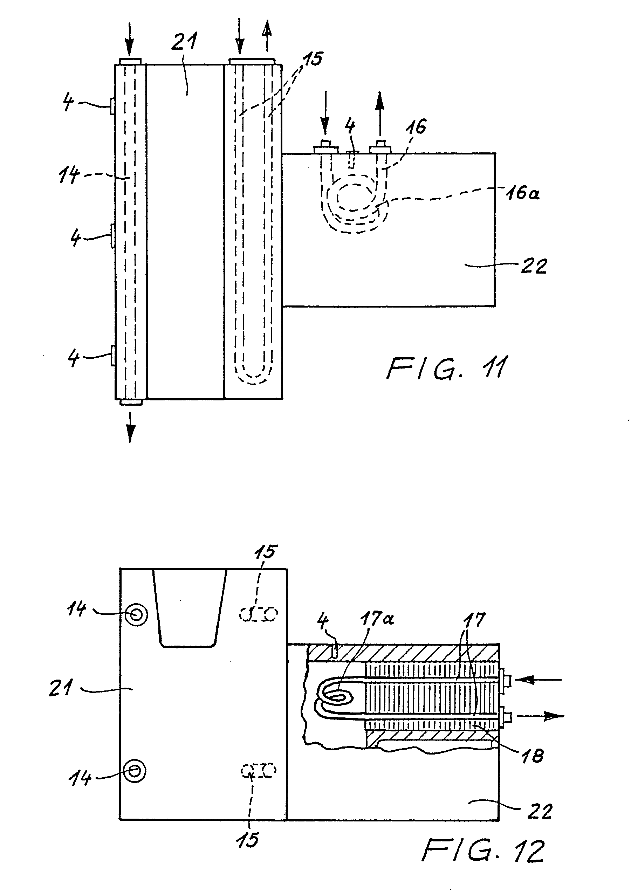

Befinden sich Wärmequellen W im oberen Teil des Bettes 1 (Fig. 7), so ergibt sich eine deutliche Deformation in der y-Achse nach oben hin. Wirken sich Wärmequellen W in der unteren Zone des Bettes 1 aus (Fig. 8), so dehnt sich dasselbe unten stärker aus als oben, so daß im Vergleich zu Fig. 7 die Verformung im umgekehrten Sinn erfolgt. Bei dem in Fig. 9 gezeigten Fall wurde der Vorderseite des Bettes 1 durch Wärmequellen W Wärme zugeführt. Es ergibt sich dann in erster Linie eine Geradheitsabweichung in horizontaler Richtung (z-Achse), während die Verformung in vertikaler Richtung (y-Achse) nur klein ist. Bei Erwärmung des Bettes 1 auf der hinteren Seite (Fig. 10) ist die Verformung in z-Richtung entgegengesetzt zu der in Fig. 9.

Das Prinzip der u.a. in Verbindung mit den Figuren 5 und 6 erläuterten gezielten Anordnung von Wärmequellen bzw. Wärmesenken läßt sich bei Werkzeugmaschinen-Gestellen der verschiedensten Arten und Formen verwirklichen. Als weiteres Beispiel zeigt Fig. 11 eine in Draufsicht T-förmige Anordnung von zwei miteinander verbundenen Bauteilen 21 und 22. Es kann sich z.B. um einen Grundrahmen für eine Bettschleifmaschine oder Bettfräsmaschine handeln, bei dem an ein gerades durchgehendes Bett 21 ein Querteil 22 angeschraubt ist. In dem Bett 21 sind von einem temperierenden Medium zu durchströmende Rohrleitungen od.dgl. vorgesehen, von denen die eine Leitung 14 durchgehend und die andere Leitung 15 schleifenförmig zurückgeführt ist. In Höhenrichtung des Bettes 21 können mehrere solcher Leitungssysteme vorgesehen sein. Als Beispiel ist dies schematisch im linken Teil der Fig. 12 angedeutet.

In Fig. 11 ist im Querteil 22 eine innerhalb des letzteren mehrfach gewundene Leitung 16 gezeigt, bei der durch Windungen 16a eine Konzentration der Heiz- bzw. Kühlwirkung in dem betreffenden Bereich erzielbar ist.

Im rechten Teil der Fig. 12 ist eine weitere Ausführung veranschaulicht, die vielfach von Vorteil sein kann. Eine Rohrleitung 17 für Hin- und Rückfluß ist in ihrem Endteil 17a wendelförmig ausgebildet, um in dem dortigen Bereich eine quasi punktförmige thermische Beeinflussung des Bauteils 22 zu ermöglichen.

Nicht immer werden Bauteile von Werkzeugmaschinen beispielsweise auf der Vorderseite oder auf der Oberseite in größeren Partien durch Wärmeeinwirkung deformiert. Vielmehr kann auch eine im wesentlichen konzentrierte Wärmequelle vorhanden sein, die sich durch normale Maßnahmen nicht beseitigen läßt. In solchen Fällen ist es dann besonders vorteilhaft, das System für ein temperierendes Medium so zu gestalten, wie es Fig. 11 bei 16a und Fig. 12 bei 17a oder Fig. 6 bei 8a zeigt.

Abgesehen hiervon ist bei der Ausführung nach Fig. 12 die Rohrleitung 17 in ihren als Zu- und Ableitung dienenden Teilen in ein Isoliermaterial 18 eingebettet. Dadurch wird in diesem Bereich eine Beeinflussung des Bauteils 22 vermieden. Solche und ähnliche Ausführungen können sich in vielen Fällen empfehlen.

In den Figuren 11 und 12 sind lediglich als Beispiel einige Temperatur-Meßstellen 4 angedeutet. Weitere Meßstellen sind der Übersichtlichkeit halber nicht dargestellt.

Die mit Mitteln zur thermischen Beeinflussung ausgestatteten Bauteile, wie Betten, Ständer, Gehäuse usw. können wie üblich aus Gußeisen bestehen oder als geschweißte Stahlkonstruktion ausgeführt sein. Darüber hinaus sind aber für eine temperierende Beeinflussung auch noch andere Werkstoffe bedeutsam. So bietet insbesondere die Verwendung von Polymerbeton oder eines vergleichbaren Materials Vorteile, sei es allein, sei es in Kombination mit anderen Werkstoffen.

Fig. 13 zeigt einen Bauteil 23, der ein Gehäuse 24 aus Gußeisen (oder auch aus geschweißtem Stahl) mit Rippen 24a mit einer gegossenen oder geschütteten Füllung 25 aus Polymerbeton aufweist. In dieser Füllung können in einem oder mehreren Bereichen Mittel zur Temperaturbeeinflussung vorgesehen sein. Als Beispiel ist eine Rohrleitung 26 mit einer mehrfachen Windung 26a als Wärmequelle bzw. -senke dargestellt.

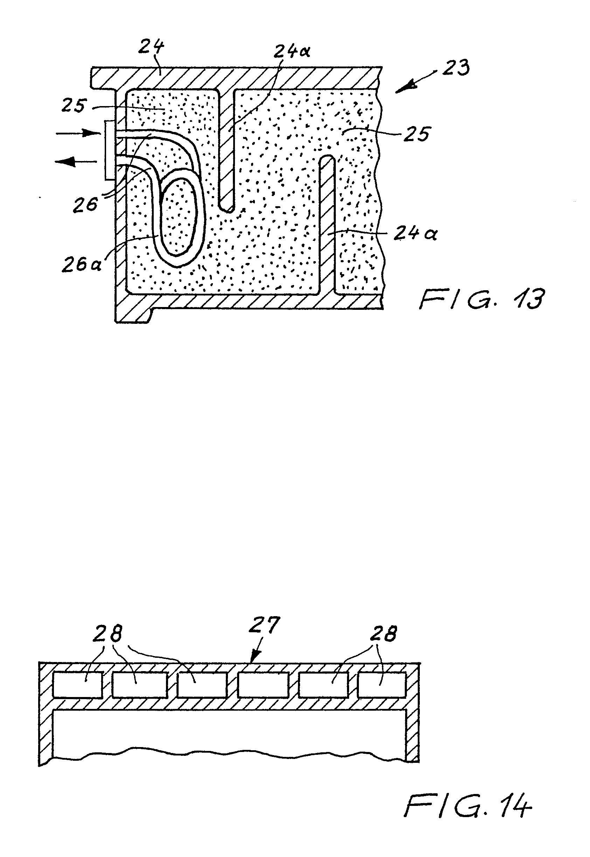

In Fig. 14 ist der obere Teil eines Werkzeugmaschinen-Gestells 27 gezeigt, das aus Gußeisen besteht oder als Schweißkonstruktion ausgebildet ist und das einzelne Kammern 28 aufweist, die mit temperierendem Medium gefüllt sind. Dabei kann die Ausführung so sein, daß jede Kammer separat von einem Medium durchströmt wird, oder insbesondere auch so, daß zumindest einige der Kammern jeweils abwechselnd an entgegengesetzten Enden miteinander verbunden sind. Die betreffenden Kammern werden z.B. mäanderartig durchflossen.

Wie stark die Energiezufuhr sein muß, um einen Bauteil aufzuheizen oder auch zu kühlen, hängt u.a. von der Temperaturverteilung innerhalb des Bauteils ab. Bei einer genügenden Anzahl von Temperaturmeßstellen und gezielter Steuerung der Wärme-Zuführung oder -Abführung über Mikrorechner od.dgl. läßt sich die gewünschte Wirkung in annehmbarer Zeit erreichen.

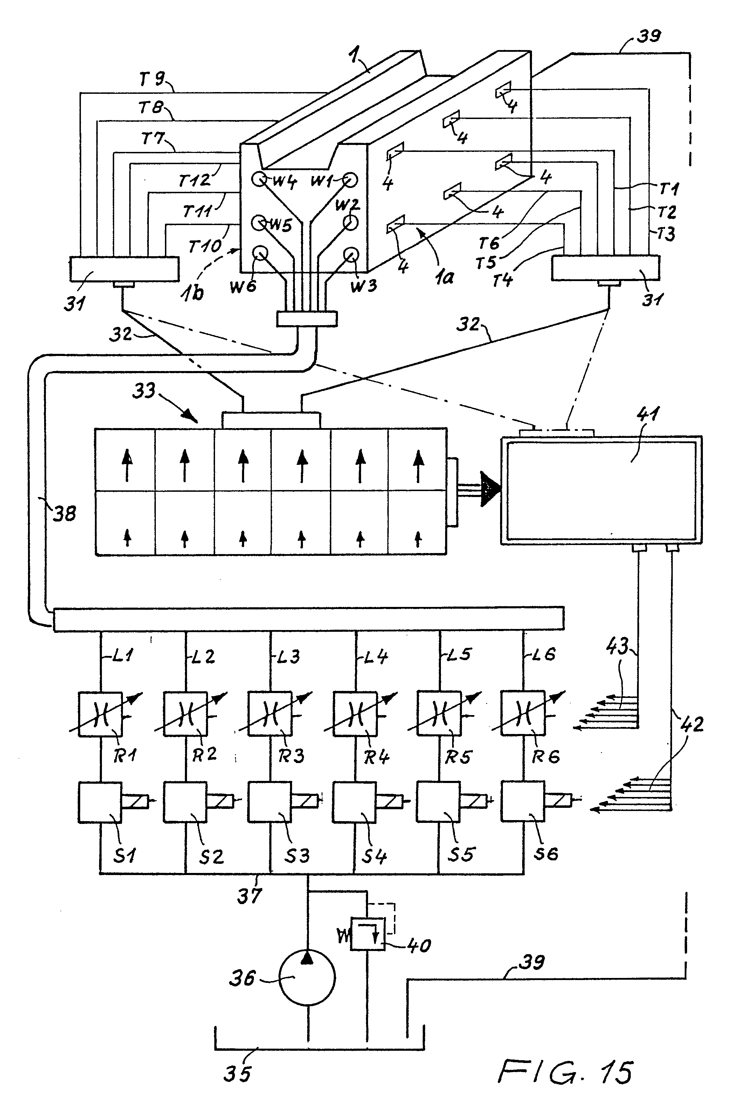

Nachstehend wird in Verbindung mit Fig. 15 ein vorteilhaftes Ausführungsbeispiel einer Vorrichtung zur Temperaturbeeinflussung eines Werkzeugmaschinen-Bauteils im Sinne der Erfindung erläutert.

Das z.B. aus Polymerbeton gegossene Bett 1 einer im übrigen nicht dargestellten Werkzeugmaschine, etwa einer Schleifmaschine, ist auf der Vorderseite 1a mit einer ausreichenden Anzahl von Temperatur- Meßstellen 4 versehen. Entsprechende Meßstellen befinden sich auf der Rückseite 1b des Bettes. Je nach dessen Ausbildung im einzelnen bzw. je nach sonstigen Gegebenheiten kann die Anzahl solcher Temperatur-Meßstellen auf der Vorderseite und auf der Rückseite auch unterschiedlich sein.

Die von den Temperatur-Meßgeräten an den Meßstellen 4 gelieferten Werte T1, T2, T3, T4, T5, T6 (Vorderseite) und T7, T8, T9, T10, T11, T12 (Rückseite) werden von Übertragungseinheiten 31 aus über Kabel 32 einer Anzeige-Einrichtung ? zugeleitet. Diese kann vorteilhaft einen Bildschirm aufweisen, auf dem die Werte von den einzelnen Meßstellen sichtbar gemacht werden, sei es in analoger oder in digitaler Form, sei es gleichzeitig oder - nach jeweiliger Umschaltung - nacheinander. In Fig. 15 ist angenommen, daß am Bett 1 unterschiedliche Temperaturen vorliegen, und zwar an den oberen Meßstellen höhere Temperaturen T1 bis T3 und T7 bis T9 als an den unteren Meßstellen. Dies ist an der Anzeige 33 durch verschieden große Pfeile angedeutet.

Das Bett 1 ist ferner mit Wärmequellen bzw. -senken ausgestattet, wie solche im einzelnen weiter oben schon erläutert worden sind. In Fig. 15 sind dieselben der Übersichtlichkeit halber nur durch Kreise W1 bis W6 angedeutet. Es kann sich z.B. um Rohrleitungen für ein strömendes Medium handeln.

Wie erläutert wurde, ergeben Erwärmungen eines Bettes oder anderen Maschinen-Bauteils systematische Fehler. Ist das temperaturabhängige Verhalten eines solchen Bauteils bekannt, was notwendigenfalls durch eine einmalige grundsätzliche Untersuchung einer gegebene Konstruktion ermittelt werden kann, so läßt sich nach einer Messung des jeweils herrschenden Temperaturfeldes am Bauteil voraussagen, in welcher Weise sich derselbe verformt.

Im hier angenommenen Fall, wo im oberen Teil des Bettes 1 die Temperaturen höher sind als im unteren Teil, wird sich eine Verformung ähnlich der in Fig. 7 gezeigten ergeben. Es geht nun darum, diese Deformation rückgängig zu machen. Dies geschieht dadurch, daß das Bett 1 einer temperierenden Beeinflussung unterworfen wird, mit der ein Zustand hergestellt wird, bei dem der Bauteil oder seine für das Arbeiten der Maschine maßgebenden Teile gewünschte Genauigkeit wieder erreicht hat. Dies kann ein Ausgangs- oder Ursprungstemperatur-Zustand sein oder ein davon abweichender Temperatur-Zustand, bei dem jedoch eine geometrische Ähnlichkeit gegenüber einem Grundzustand gegeben ist.

Bei der Ausführung nach Fig. 15 geschieht die thermische Beeinflussung mittels eines strömenden Mediums, z.B. Wasser, ggfs. mit Zusätzen. In einem Behälter 35 wird Wasser von bestimmter Temperatur, die über der Umgebungstemperatur liegt, bereitgehalten. Der Behälter kann zu diesem Zweck mit einer nicht dargestellten thermostatisch geregelten Heizeinrichtung an sich bekannter Art versehen sein. Eine Pumpe 36 fördert Wasser aus dem Behälter 35 in eine Leitung 37, von der Zweigleitungen zu einzelnen, elektrisch ansteuerbaren Schaltventilen S1 bis S6 führen. Von jedem derselben geht eine Leitung L1 bis L6, in der sich jeweils eine einstellbare Drossel R1 bis R6 befindet, zu der betreffenden Wärmequelle W1 bis W6. Auf der Strecke zum Bett 1 sind diese Einzelleitungen zusammengefaßt und innerhalb einer Isolierung 38 untergebracht.

Eine Rückströmleitung ist lediglich schematisch bei der Zahl 39 angedeutet. Der Pumpe 36 ist ein Überdruckventil 40 zugeordnet, über das ein unmittelbarer Rückfluß zum Behälter erfolgen kann.

Die Temperatur-Meßwerte werden von den Übertragungseinheiten 31 über Kabel 32 unmittelbar, wie durch strichpunktierte Linien angedeutet ist, oder, wie wie mitausgezogenen Linien dargestellt, über das Anzeigegerät 33 einem Regler 41 zugeführt, von dem aus Steuerleitungen 42 zu den Schaltventilen S1 bis S6 führen. Weiterhin gehen vom Regler 41 Steuerleitungen 43 zu den Drosseln R1 bis R6, wie es schematisch eingezeichnet ist.

Im Regler 41 ist ein auf den gegebenen Fall abgestelltes Programm gespeichert. Dieses berücksichtigt, wie sich Temperaturänderungen in verschiedenen Bereichen des Bettes 1 auf das Verformungsverhalten desselben auswirken, und kann die notwendigen Befehle zur Rückgängigmachung unerwünschter Wärmedeformationen geben. Das Programm kann insbesondere auch Informationen darüber enthalten und verarbeiten, wie die zuzuführende Wärmemenge im Hinblick auf die Wärmekapazität und die Wärmeleitung an den einzelnen Stellen des Bauteils zu dimensionieren ist.

Bei dem in Fig. 15 gezeigten Beispiel werden durch den Regler 41 diejenigen Wärmequellen eingeschaltet, die im unteren Bereich des Bettes 1 liegen, also die Wärmequellen W3 und W6, ggfs. zusätzlich die Wärmequellen W2 und W5. Dies geschieht durch Öffnen der zugehörigen Schaltventile S3 und S6 vom Regler 41 aus. Dadurch wird in den unteren Bereichn des Bettes die Temperatur angehoben und die zuvor bestehende Verformung rückgängig gemacht, derart, daß das Bett den Ausgangs- oder Grundzustand annimmt, der die geforderte Genauigkeit ergibt.

Es besteht somit ein geschlossener Regelkreis: Temperaturmessung - Weiterleitung der Temperaturmeßwerte zum Regler, ggfs. mit gleichzeitiger Anzeige dieser Meßwerte -Abfrage des Reglers, was bei der gegebenen Temperaturverteilung an Wärme wo zugeführt werden muß - schließlich Einschaltung der entsprechenden Wärmequellen, um die Deformation rückgängig zu machen. Das System kontrolliert sich dan selbst, indem im nächsten Schritt wiederum die Temperaturen gemessen und miteinander verglichen werden. In dem Augenblick, in dem sämtliche Temperaturen gleich sind bzw. in vorgegebenen Verhältnissen zueinander stehen, ist auch die Wärmedeformation des Bauteils verschwunden. Der thermische Zustand des Bettes, bei dem dies der Fall ist, kann durchaus bei einem höheren Temperaturniveau liegen als ohne eine solche Regelung.

Die Drosseln R1 bis R6 können unabhängig von der Regelung einstellbar sein, etwa, um eine zusätzliche Anpassungs-oder Korrekturmöglichkeit zu haben. Sie lassen sich aber auch in die Regelung mit einbeziehen. Es kann dann insbesondere so sein, daß be geöffnetem Schaltventil die zugehörige Drossel von der Regelung so eingestellt wird, wie es nötig ist, um möglichst bald den gewünschten Zustand zu erreichen. Die Ausführung läßt sich aber auch so treffen, daß auf die Drosseln ganz oder teilweise verzichtet wird. Die zugeführte Wärmemenge kann dann vom Regler durch die Dauer der Öffnung des betreffenden Schaltventils bestimmt werden. Es ist in jedem Fall auch möglich, die Schaltventile durch den Regler im Impulsbetrieb zu öffnen und zu schließen, d.h. Schließ- und Öffnungszeiten im Verlauf eines Regelvorganges abwechseln zu lassen.

Anstelle nur eines Behälters für ein temperierendes Medium können auch zwei oder mehr solcher Behälter vorgesehen sein, in denen jeweils Medium von unterschiedlicher Temperatur bereitgehalten wird. Es lassen sich dann bestimmte Bereiche mit Medium von relativ hoher Temperatur und andere Bereiche mit Medium von relativ niedriger Temperatur versorgen. Die Ausführung der Schaltung und Regelung wird dann sinngemäß und entsprechend getroffen.

Dies gilt auch für Einrichtungen, bei denen als Wärmequelle nicht ein strömendes Medium dient, sondern elektrische Heizelemente, Strahler oder ähnliche Mittel zur Temperierung eingesetzt werden.

Alle in der vorstehenden Beschreibung erwähnten bzw. in der Zeichnung dargestellten Merkmale sollen, sofern der bekannte Stand der Technik es zuläßt, für sich allein oder auch in Kombinationen als unter die Erfindung fallend angesehen werden.

## Ansprüche

1. Verfahren zur Erhöhung der Arbeitsgenauigkeit von Werkzeugmaschinen durch thermische Beeinflussung wenigstens eines Bauteiles der Werkzeugmaschine, dadurch gekennzeichnet, daß an wenigstens zwei vorgegebenen Stellen oder Bereichen eines oder mehrerer Bauteile der Werkzeugmaschine die dort herrschende Ist-Temperatur kontinuierlich oder in zeitlichen Abständen gemessen wird und daß, wenn diese Ist-Temperaturen um ein vorgebbares Maß voneinander abweichen, eine thermische Beeinflussung wenigstens eines Bereiches im Sinne der Angleichung der Ist-Temperaturen vorgenommen wird.

2. Verfahren nach Anspruch 1, dadurch gekennzeichnet, daß die Temperaturen an solchen Stellen der Werkzeugmaschine gemessen werden, die eine zumindest annähernde Beurteilung des Verhaltens der Maschine im Hinblick auf die geometrischen Ähnlichkeit bei verschiedenen Temperaturniveaus gestatten.

3. Verfahren nach einem der Ansprüche 1 und 2, gekennzeichnet durch die zumindest teilweise Anwendung bei der Herstellung bzw. Montage der Werkzeugmaschine.

4. Verfahren nach einem der Ansprüche 1 bis 3, dadurch gekennzeichnet, daß die thermische Beeinflussung mittels Konvektion durchgeführt wird.

5. Verfahren nach einem der Ansprüche 1 bis 3, dadurch gekennzeichnet, daß die thermische Beeinflussung mittels Strahlung durchgeführt wird.

6. Verfahren nach einem der Ansprüche 1 bis 5, dadurch gekennzeichnet, daß es automatisch nach einer Vorgabe durchgeführt wird.

7. Vorrichtung zur thermischen Beeinflussung wenigstens eines Bauteiles einer Werkzeugmaschine, insbesondere zur Durchführung des Verfahrens nach einem der Ansprüche 1 bis 6, dadurch gekennzeichnet, daß an der Werkzeugmaschine (1, 21, 22, 23, 27) wenigstens zwei Temperatur-Meßstellen (4) vorgesehen sind, daß thermisch zu beeinflussenden Bereichen (A, B, C, D, E, F, G, G', H, J) der Werkzeugmaschine Wärme-Zuführungs-bzw. -Abführungs-Einrichtungen (6, 7, 8, 10, 12, 13, 14, 15, 16, 17, 26, W1, W2, W3, W4, W5, W6) zugeordnet sind und daß Schalt- oder Steuerelemente (S1, S2, S3, S4, S5, S6) vorgesehen sind, mittels derer die Wärme-Zuführungs- bzw. Abführungs-Einrichtungen nach Maßgabe von an Temperatur-Meßstellen (4) erfaßten Werten zur Erzielung eines gewünschten Temperaturzustandes zur Wirkung bringbar sind.

8. Vorrichtung nach Anspruch 7, gekennzeichnet durch eine Anzeige (33) für die an Temperatur-Meßstellen (4) erfaßten Werte.

9. Vorrichtung nach einem der Ansprüche 7 und 8, gekennzeichnet durch einen funktionsmäßig mit Temperatur-Meßgeräten (5) und den Schalt-oder Steuerelementen (S1, S2, S3, S4, S5, S6) für die Wärme-Zuführungs-bzw. -Abführungs-Einrichtungen verbundenen Regler (41) zur selbsttätigen Herstellung einer vorgebbaren Temperaturverteilung an den zu beeinflussenden Bereichen.

10. Vorrichtung nach einem der Ansprüche 7 bis 9, dadurch gekennzeichnet, daß sie sum Betrieb mit wenigstens einem temperierenden Medium ausgebildet ist.

11. Vorrichtung nach einem der Ansprüche 7 bis 10, dadurch gekennzeichnet, daß sie Heizelemente (10, 12) enthält.

12. Vorrichtung nach einem der Ansprüche 7 bis 11, gekennzeichnet durch den zu beeinflussenden Bereichen () zugeordnete Wärmestrahler (13).

13. Werkzeugmaschinen-Bauteil, wie Gestell, Untersatz, Bett, Schlitten, Spindelstock od.dgl., insbesondere zur Verwendung bei dem Verfahren nach einem der Ansprüche 1 bis 6 bzw. bei der Vorrichtung nach einem der Ansprüche 7 bis 12, dadurch gekennzeichnet, daß wenigstens in einem Bereich (A, B, C, D, E, F, G, G', H, J) des Bauteils (1, 21, 22, 23, 27) ein Hohlraum (6, 7, 8, 9, 11, 14, 15, 16, 17, 26, 28) mit einem Zulauf und einem Ablauf für ein Strömungsmedium vorgesehen ist.

14. Werkzeugmaschinen-Bauteil nach Anspruch 13, dadurch gekennzeichnet, daß der Hohlraum (6, 7, 8, 14, 15, 16, 17, 26) rohrförmig ausgebildet ist.

15. Werkzeugmaschinen-Bauteil nach einem der Ansprüche 13 und 14, dadurch gekennzeichnet, daß der Hohlraum (7, 8, 15, 16, 17, 26) einen umgelenkten Weg für das Strömungsmedium bildet.

16. Werkzeugmaschinen-Bautei nach Anspruch 15, gekennzeichnet durch eine mehrfache Umlenkung (8a, 16a, 17a, 26a).

17. Werkzeugmaschinen-Bauteil nach einem der Ansprüche 13 bis 16, dadurch gekennzeichnet, daß der Hohlraum (28) kammerförmig ausgebildet ist.

18. Werkzeugmaschinen-Bauteil nach einem der Ansprüche 13 bis 17, dadurch gekennzeichnet, daß der Bauteil (1, 23) wenigstens teilweise aus einem betonartigen Material besteht.

19. Werkzeugmaschinen-Bauteil, wie Gestell, Untersatz, Bett, Schlitten, Spindelstock od.dgl., insbesondere zur Verwendung bei dem Verfahren nach einem der Ansprüche 1 bis 6 bzw. bei der Vorrichtung nach einem der Ansprüche 7 bis 12, dadurch gekennzeichnet, daß wenigstens in einem Bereich (H, J) des Bauteils (1) eine elektrische Heizeinrichtung (10, 12) vorgesehen ist.

FIG. 1

FIG. 3

FIG. 2

FIG. 4

FIG. 5

FIG. 6

EP 0 355 730 A2

FIG.7

FIG. 8

FIG. 9

FIG. 10

FIG. 11

FIG. 12

FIG. 13

FIG. 14

FIG. 15